(19) Europäisches Patentamt
European Patent Office
Office européen des brevets

(11) **EP 2 107 697 A1**

(12) **EUROPEAN PATENT APPLICATION**

(43) Date of publication:
**07.10.2009 Bulletin 2009/41**

(51) Int Cl.:
*H04B 7/06* [(2006.01)]   *H04B 7/04* [(2006.01)]

(21) Application number: **08251246.8**

(22) Date of filing: **31.03.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **British Telecommunications Public Limited Company London Greater London EC1A 7AJ (GB)**

(72) Inventor: **The designation of the inventor has not yet been filed**

(74) Representative: **Lau, Chi-Fai et al BT Group Legal Intellectual Property Department BT Centre (ppC5A) 81 Newgate Street London, EC1A 7AJ (GB)**

(54) **Channel estimates for an antenna diversity communication system**

(57)   A transceiver for operation in an antenna diversity communication system, the receiver comprising signal processing equipment configured to: form a channel estimate for a channel between the transceiver and a second transceiver; form an estimate of the correlation between paths of the channel; determine in dependence on the estimated correlation whether to transmit data indicating that estimate to the second transceiver; and cause the transceiver to transmit data indicating that estimate to the second transceiver only if the said determination is positive.

Figure 1

EP 2 107 697 A1

**Description**

This invention relates to communicating channel estimates, and specifically to determining when to transmit a channel estimate.

Multiple element or diversity antennas have been the subject of intense research over the past few years as a way of increasing the coverage or capacity of a wireless link. (See "Introduction to Space-Time Wireless Communications" by Paulraj, Nabar and Gore). The generic case is where both the transmitter and receiver(s) on a link have multiple antennas all operating on the same radio channel and advantage is taken of the spatial and time differences between them. This system is known as MIMO (multiple input, multiple output).

There are several ways in which MIMO can be implemented, but two general categories can be distinguished.

In a first type of system, the transmitter uses no knowledge of the channel in determining what signals to transmit via which antennas. This type of system is called open-loop MIMO. In open-loop MIMO the transmitter typically transmits equal energy from each antenna element and applies symbol coding that is resilient to any channel conditions. An example of such coding is the Alamouti coding specified by the WiMAX forum.

In a second type of system the transmitter uses knowledge of the channel to determine what signals to transmit via which antennas. That knowledge is gained through feedback from the receiver. This type of system is called closed-loop MIMO. In a closed-loop MIMO system, the transmitter can use algorithms to set energy allocation and coding across the antennas in dependence on its knowledge of the channel. This can increase capacity and/or signal to interference ratio. However, in order to achieve these gains it is necessary for the receiver to feed back information about the channel. That feedback uses some capacity, and so there is a need to balance the gains obtained from more detailed channel knowledge against the capacity overhead that is lost to sending channel feedback information.

To address this balance, a considerable amount of research has looked for ways of maximising the coverage and capacity of closed-loop MIMO systems using a minimum of feedback. The problem with this approach is that the characteristics of the channel change when any part of the channel alters: for example when the transmitter or the receiver moves, or when an object moves in the propagation path. Therefore, when a minimum of feedback is employed the coverage and capacity are not increased greatly beyond open-loop conditions.

The 3GPP (Third Generation Partnership Project) have adopted a code-book method in their LTE (long term evolution) system. In the code-book system a label is sent to the transmitter from which the transmitter can look up the multipath matrix that most closely resembles the channel, similar to items in a catalogue. However, this system is restrictive to a certain number of channel types and is far from optimum. (See "Grassmannian Beamforming for MIMO Wireless Systems" by David Love for a general discussion of code-book methods). Another approach to reducing the bandwidth needed to provide channel feedback information is to assess the channel periodically at the receiver and to send back to the transmitter a channel condition number (see for example "Switching Between Diversity and Multiplexing in MIMO systems" by Heath and Paulraj, 2005).

There is a need to improve the balance between gains that can be had from making use of channel information at a diversity transmitter and the loss of bandwidth that results from feeding back channel information to the transmitter.

According to one aspect of the present invention there is provided a transceiver for operation in an antenna diversity communication system, the receiver comprising signal processing equipment configured to: form a channel estimate for a channel between the transceiver and a second transceiver; form an estimate of the correlation between paths of the channel; determine in dependence on the estimated path correlation whether to transmit data indicating that estimate to the second transceiver; and cause the transceiver to transmit data indicating that estimate to the second transceiver only if the said determination is positive.

According to a second aspect of the invention there is provided a method for controlling a transceiver for operation in an antenna diversity communication system, the method comprising: forming a channel estimate for a channel between the transceiver and a second transceiver; forming an estimate of the correlation between paths of the channel; determining in dependence on the estimated correlation whether to transmit data indicating that estimate to the second transceiver; and transmitting data indicating that estimate to the second transceiver only if the said determination is positive.

The path correlation of the channel may be estimated in dependence on the ratio of (i) the product of a first instantaneous correlation matrix for a plurality of subcarriers at a first time and a second instantaneous correlation matrix for the plurality of subcarriers at a second time to (ii) the product of a normalised value of the first instantaneous correlation matrix and a normalised value of the second instantaneous correlation matrix.

The instantaneous correlation matrix may be determined as:

$$\mathbf{R}_i\left(t_n\right) = \left\langle \operatorname{vec}\left(\mathbf{H}(\mathbf{f})_i\left(t_n\right)\right) \operatorname{vec}\left(\mathbf{H}(\mathbf{f})_i^{\mathrm{H}}\left(t_n\right)\right)\right\rangle$$

for the $i$th subcarrier and at the $t_n$ th time sample, where $H(f)_i$ is the frequency response of the channel corresponding to the $i$th subcarrier.

The transceiver may be arranged to determine that data indicating the channel estimate should be transmitted if the path correlation exceeds a predetermined threshold.

The transceiver may be a MIMO transceiver and/or an ODFM transceiver.

The transceiver may be configured to determine when to form the channel estimate in dependence on the frequency with which channel estimates have previously been transmitted to the second transceiver.

The said data indicating the channel estimate may be data expressing the change in the channel estimate since it was last transmitted to the second transceiver.

The present invention will now be described by way of example with reference to the accompanying drawings. In the drawings:

Figure 1 is a schematic diagram of a communication system;

Figure 2 illustrates a comparison of the BER performance for SVD with and without water-filling;

Figure 3 illustrates change of correlation metric distance (CMD) with time samples;

Figure 4 illustrates an algorithm for determining when to update a transmitter with channel information.

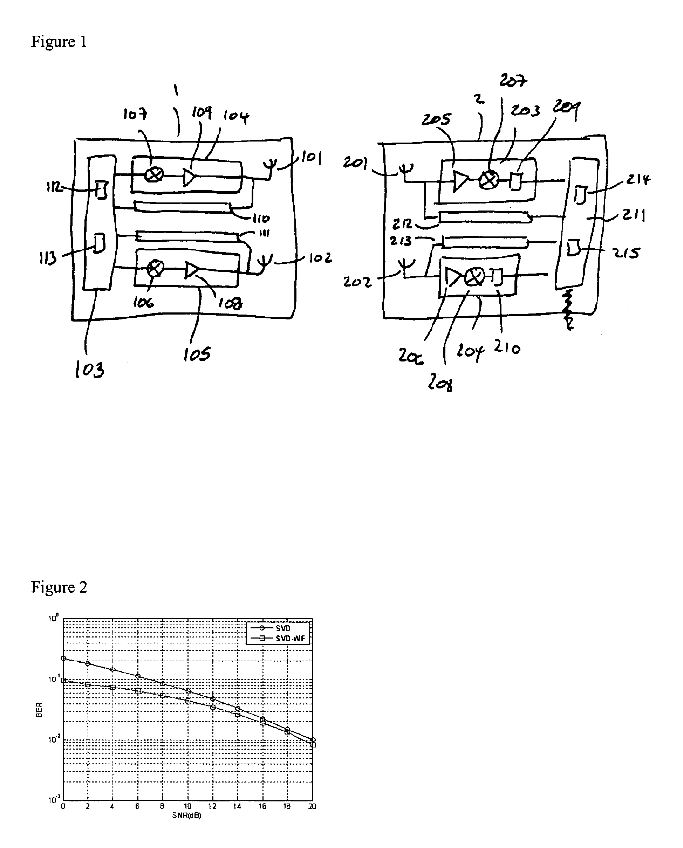

The system of figure 1 is a MIMO system whose receiver employs an algorithm to determine when to feed back channel information. Broadly speaking, the algorithm involves estimating the path correlation of the channel, and determining when to feed back channel information in dependence on the estimated path correlation of the channel. For example, the path correlation of the channel may be estimated using the correlation matrix distance.

Figure 1 shows a spatial diversity system in which the present approach can be used. The system comprises a transmitter 1 and a receiver 2. The transmitter and the receiver each have multiple antennas 101, 102, 201, 202, so there are four communication channels between them: 11 to 201, 101 to 202, 102 to 201 and 102 to 202. The transmitter has a baseband processor section 103 which receives traffic data for transmission and generates symbols for transmission by each antenna, and two analogue transmit chains 104, 105 which comprise mixers 106, 107 for upconverting those signals to radio frequency and amplifiers 108, 109 for amplifying the upconverted signals to drive a respective one of the antennas. The receiver has analogue receive chains 203, 204 which comprise amplifiers 205, 206 for amplifying signals received at a respective one of the antennas, mixers 207, 208 for downconverting the amplified signals and analogue-to-digital converters 209, 210 for digitising the downconverted signals to provide an input to baseband processor section 211.

The receiver 2 can also provide feedback to the transmitter 1, and the transmitter 1 can receive that feedback. For this purpose, the receiver 2, has transmit chains 212, 213 which are analogous to those of the transmitter 1, and the transmitter 1 has receive chains 110, 111 which are analogous to those of the receiver 2. The description below will discuss the feedback of channel estimates from receiver 2 to transmitter 1, but similar principles could be used to govern the feeding back of channel estimates from transmitter 1 to receiver 2 for use in optimising subsequent transmissions by the receiver 2.

The baseband processing sections 103, 211 comprise processors 112, 214. Each processor executes instructions stored in an associated memory 113, 215 in order to perform its functions.

In this example the transmitter and receiver operate according to an OFDM (orthogonal frequency division multiplexing) protocol.

As in other closed-loop MIMO-OFDM systems, the receiver 2 can estimate the channels between the transmitter and itself by means of the processing section 211. These estimates are known as $\hat{H}$. The receiver can send messages to the transmitter to update the transmitter's knowledge of the receiver's estimates. As indicated above, the receiver does not feed back $\hat{H}$ at pre-determined intervals. Instead, it decides when to feed back $\hat{H}$ based on current channel conditions.

The information in the feedback messages may take various forms. Three example forms of the feedback are changes in $\hat{H}$ (or $\Delta\hat{H}$), codebook labels or the eigenvectors from singular value decomposition (SVD). In the present example, the receiver sends changes in $\hat{H}$ back to the transmitter, and the consequent SVD is performed at both the transmitter and the receiver. Although this approach could require extra processing, it is typically more efficient overall to send back the changes in $\hat{H}$ rather than to send $\hat{H}$ itself. Preferably, in addition to reporting changes in $\hat{H}$ the full $\hat{H}$ is also sent from time to time.

A simulation of the present approach will now be described. Although the metrics presented for determining when to feed back information are independent of the modulation scheme that is used, the simulation uses gray-coded QPSK without forward-error correction. OFDM is used with a fast Fourier transformation (FFT) size of 256.

The channel model used in the simulations is based on the ITU channel B Pedestrian 6-tap model (see ITU-R Recommendation M.1225. "Guidelines for Evaluation of Radio Transmission Technologies for IMT-2000," 1997. Page 28) which has been modified for MIMO use based on correlation methods from Ericsson, "MIMO Channel model for TWG RCT ad-hoc proposal," V16, 2006 and using antenna and angle spread parameters taken from the 3GPP spatial channel model (SCM) (see 3GPP, "Spatial channel model for MIMO simulations" TR 25.996 V 6.1.0 (2003-09), Technical Report. [Online]. Available: http://www.3gpp.org/). The Pedestrian B channel was chosen because it is the most demanding of the ITU channel models in terms of bit error rate (BER) performance against signal to noise ratio (SNR). This is caused by one of the taps being comparable in size to the initial signal resulting in very deep fast fading.

When in space-time block coding (STBC) mode, the Alamouti code is used (see S. M. Alamouti, "A simple transmit diversity technique for wireless communications ," IEEE J. Sel. Area Commun., vol. 16, no. 8, pp. 1451-1458, Oct. 1998).

The channel model used in the present simulations generates any required number of **H** MIMO channel matrices and is 'non-physical' in the sense that the path is treated as baseband from the transmitter to receiver, including the correlation of the antennas. This dependency on the antennas is slightly restrictive but leads to a much simpler model than ray-tracing or geometrical methods. The restriction is not considered important since potentially typical antenna configurations of $4\lambda$ spacing at the transmitter (assumed to be a base-station) and $\lambda/2$ at the receiver (assumed to be a user terminal) are used.

The calculation of the channel matrix **H** is performed using the following formula, for a MIMO system with $N_R$ receiver antennas and $N_T$ transmitter antennas:

$$\mathrm{vec}\left(\mathbf{H}\right) = \mathbf{R}_{MIMO}^{1/2}\,\mathrm{vec}\left(\mathbf{G}\right) \qquad (1)$$

where vec($\cdot$)is to vectorize a given matrix. $\mathbf{R}_{MIMO}$ represents the spatial correlation matrix for all the MIMO channels, which can be split into correlation seen at the transmitter end from that at the receiver end by the Kronecker function:

$$\mathbf{R}_{MIMO} = \mathbf{R}_{TX} \otimes \mathbf{R}_{RX} \qquad (2)$$

which carries the assumption that each transmitter antenna element identically illuminates every element in the receiver array.

In the 2×2 MIMO system the $\mathbf{R}_{TX}$ and $\mathbf{R}_{RX}$ have the following elements:

$$\mathbf{R}_{TX} = \begin{bmatrix} 1 & \alpha \\ \alpha^{\bullet} & 1 \end{bmatrix} \quad \mathbf{R}_{RX} = \begin{bmatrix} 1 & \beta \\ \beta^{\bullet} & 1 \end{bmatrix} \qquad (3)$$

where the complex values of $\alpha$ and $\beta$ are taken from Ericsson, "MIMO Channel model for TWG RCT ad-hoc proposal," V16, 2006 for the antenna element spacings listed above and are different for each tap. This reference also contains values for other common element spacings. The $N_R \times N_T$ matrix G is comprised of i.i.d. elements derived from Rayleigh, Ricean and log-normal shadowing distribution functions, and it also incorporates the Doppler effect according to 3GPP, "Spatial channel model for MIMO simulations" TR 25.996 V 6.1.0 (2003-09) by multiplying a time varying factor $\varphi_v$ to each of its elements.

The channel matrices **H** delivered by the model are 4 dimensional, the first two dimensions containing the index of receiver and transmitter antennas and the third and fourth dimensions containing the tap index and time samples of the channel impulse response respectively.

In an OFDM system it is desirable to apply MIMO techniques to every subcarrier or every group. Because of this segmentation in the frequency domain, it is more convenient to have **H** in terms of the channel frequency response, which can be obtained from the impulse response by performing an FFT, denoting the result as **H**(f).

As described above, in a closed-loop MIMO-OFDM system, the receiver estimates the channel and sends updates on the channel state to the transmitter. The transmitter uses these updates to choose the most appropriate transmission scheme. If perfect channel state information (CSI) is known at the receiver and transmitter, then the MIMO channels on each subcarrier can be decomposed into parallel non-interfering sub-channels using the singular value decomposition (SVD). Thus for a certain time sample, the instantaneous channel transfer matrix on the *i*th channel segment can be expressed as:

$$\mathbf{H}(f)_i = \mathbf{U}_i \mathbf{D}_i \mathbf{V}_i^{\mathrm{H}} \qquad (4)$$

where $U_i$ and $V_i$ are unitary matrices, and $\mathbf{D}_i$ is the diagonal matrix of the singular values of $\mathbf{H}(f)_i$, the operator $(\cdot)^{\mathrm{H}}$ is the conjugate transpose operator. Then the received symbol vector on the $i$th subcarrier has the form:

$$\mathbf{r}_i = \mathbf{U}_i \mathbf{D}_i \mathbf{V}_i^{\mathrm{H}} \mathbf{s}_i + \mathbf{n} \qquad (5)$$

where $S_i$ is the transmitted symbol vector and n is the additive noise. Now if one uses a precoding matrix $V_i$ and a decoding matrix $\mathbf{U}_i^{\mathrm{H}}$ at the transmitter and receiver respectively, the received symbol becomes:

$$\tilde{\mathbf{r}}_i = \mathbf{D}_i \mathbf{s}_i + \tilde{\mathbf{n}} \qquad (6)$$

Since the $U_i$ matrix is unitary, the variance of the noise in (5) and (6) is the same. Equation (6) also implies that the transmitted symbol vector put into $K = \min(N_R, N_T)$ parallel sub-channels will be amplified or diminished by the singular values and those put into channels which have index larger than $K$ will be lost.

Meanwhile the transmitter can allocate the total available power across all the sub-channels for all the subcarriers since it has the CSI. The optimal power allocation can be obtained by using the water-filling algorithm (see M. A. Khalighi, J. -M. Brossier, G. Jourdain, and K. Raoof, "Water filling Capacity of Rayleigh MIMO channels," IEEE International Symposium on Personal, Indoor and Mobile Radio Communications, vol. 1, pp. 155-158, 2001 and I. E. Telatar, "Capacity of multi-antenna Gaussian channels," Europ. Trans. Telecommun., vol. 10, no. 6, pp. 585-595, Nov.-Dec. 1999). Note that the constraint of the total power for the optimisation becomes $N_T \cdot n_f$ for this MIMO-OFDM case, where $n_f$ stands for the number of the subcarriers in use. Therefore, the transmitted symbol vector on the $i$th subcarrier after precoding and power allocation becomes:

$$\mathbf{x}_i = \mathbf{V}_i \mathbf{Q}_i \mathbf{s}_i \qquad (7)$$

where the diagonal matrix $Q_i$ represents the power allocation matrix including the power allocated to each sub-channel.

A demonstration of the improvement to the BER performance due to the water-filling algorithm is shown in the simulation results in figure 2. The simulations are done in a $2\times2$ MIMO-OFDM system with a FFT size of 256 for a speed of 3 km/hr for independently Rayleigh fading channels. The water-filling algorithm gives greatest benefit at low SNRs. At high SNR the water-filling algorithm almost indentically allocates power on the sub-channels and hence the curves converge. This emphasises that CSI feedback from the receiver to transmitter is of significant value.

In a feedback system, the CSI at the transmitter will be delayed by an amount that depends upon the system protocols. At time $t_n$, the received signal will be, from (5) and (7),

$$\mathbf{r}_i(t_n) = \mathbf{U}_i(t_n)\mathbf{D}_i(t_n)\mathbf{V}_i^{\mathrm{H}}(t_n)\mathbf{V}_i(t_x)\mathbf{Q}_i(t_x)\mathbf{s}_i(t_n) + \mathbf{n} \qquad (8)$$

where the $t_x$ is a time sample in the past. Simulations having a bearing on the selection of the maximum interval between $t_n$ and $t_x$ will now be described.

Assuming a perfect channel estimation at the receiver, the changes in $\mathbf{H}(f)$ at time samples $t_1 = t_0$ and $t_1 = t_0 + 500$ for each subcarrier using the ITU-B Pedestrian model at 1km/hr for the $2\times2$ system have been simulated, with each time sample being one OFDM symbol and a symbol rate of 10kbaud. Taking the first subcarrier as an example, the detailed values of $\mathbf{H}(f)$ for two time samples with 500 samples interval are shown below:

$$\mathbf{H}(f)(:,:,1,1) = \begin{bmatrix} 0.4022 - 0.5119i & -0.6935 - 0.1160i \\ -0.1292 + 0.5553i & 0.6860 - 0.0247i \end{bmatrix}$$

$$\mathbf{H}(f)(:,:,1,501) = \begin{bmatrix} 0.3588 - 0.4263i & -0.6672 - 0.0832i \\ -0.0131 + 0.5477i & 0.6969 - 0.1626i \end{bmatrix}$$

This demonstrates the advantage of feeding back the changes in $\mathbf{H}(f)$ rather than feeding back $\mathbf{H}(f)$ itself, to reduce the overhead of the feedback.

Assuming that both the transmitter and receiver have perfect CSI at the start of the simulation, the effect of sending changes in $\mathbf{H}(f)$ (i.e. $\Delta\mathbf{H}(f)$) back to the transmitter with a uniform quantization of 0.03 and a 500 samples update rate can be modelled. Table 1 shows the number of bits that must be sent back for each real and imaginary part of every element for the ITU-B Pedestrian model at various speeds for the 2×2 system. The quantisation bits are composed of 1 sign bit to denote whether the change is increasing or decreasing, and the other bits to denote the changes in the absolute values.

Table 1 Time varying range of the amplitude in **H(f)**

| Speed (km/hr) | Change in real part of elements | Change in imaginary part of elements | Bits |
| --- | --- | --- | --- |
| 1 | 0.2866 | 0.2817 | 4 |
| 3 | 0.8925 | 0.9003 | 6 |
| 10 | 2.1278 | 2.3827 | 7 |

The metric used to control the feedback interval will be referred to as the correlation matrix distance (CMD) metric. Essentially, the capacity gain obtained by spatially multiplexing different symbols into the different multiple paths will be eroded as the channel moves, because of increase in correlation between the paths. This correlation is measured and, when it exceeds a certain threshold, the decision is taken to feed-back $\Delta\hat{H}$ to enable the transmitter to change its coding and hence restore the low path correlation. The receiver calculates the correlation matrix R, which contains the total correlation including the antennas. The receiver knows the antenna correlations and so can deduce the channel path correlation. The intervals at which the receiver calculates the path correlation is adapted to the rate of change of the channel, in the example below it is set to 500 symbols which is suitable for a user moving at 10km / hr.

At the receiver, assuming perfect channel estimation, the instantaneous spatial correlation matrix is calculated as $\mathbf{R}_i(t_n) = \left\langle \text{vec}\left(\mathbf{H}(f)_i(t_n)\right) \text{vec}\left(\mathbf{H}(f)_i^H(t_n)\right) \right\rangle$ for the $i$th subcarrier and at the $t_n$ th time sample. In M. Herdin and E. Bonek "A MIMO Correlation Matrix based Metric for Characterizing Non-Stationarity", Institut für Nachrichtentechnik und Hochfrequenztechnik, Technische Universität Wien, Austria, published in IST Mobile and Wireless Communications Summit Lyon, 2004, the CMD is introduced as a metric to measure the time variation of the spatial structure for narrowband MIMO channels. The metric has been extended in H. Xiao, A. G. Burr and L. Song, "A Time-Variant Wideband Spatial Channel Model Based on the 3GPP Mode," IEEE Vehicular Technology Conference (VTC), Montreal, Canada, September 2006 to the wideband fast fading MIMO channels. It is based on the inner product of two instantaneous correlation matrices $\mathbf{R}_i(t_1)$ and $\mathbf{R}_i(t_2)$, $tr\{\mathbf{R}_i(t_1) \cdot \mathbf{R}_i(t_2)\}$ is this inner product, and $\|\cdot\|_2$ denotes the Frobenius norm. In the wideband case, the CMD at each time sample is the averaged value over all the CMDs at all the subcarriers. The value of CMD denotes that, if the instantaneous correlation matrices are identical for all the subcarriers (apart from a scalar factor), the CMD is zero; while if they vary radically, it will tend to unity.

$$\bar{d} = \frac{\sum_{i=1}^{n_f} d_i}{n_f} = \frac{\sum_{i=1}^{n_f}\left[ 1 - \frac{tr\{\mathbf{R}_i(t_1) \bullet \mathbf{R}_i(t_2)\}}{\|\mathbf{R}_i(t_1)\|_2 \|\mathbf{R}_i(t_2)\|_2} \right]}{n_f} \qquad (9)$$

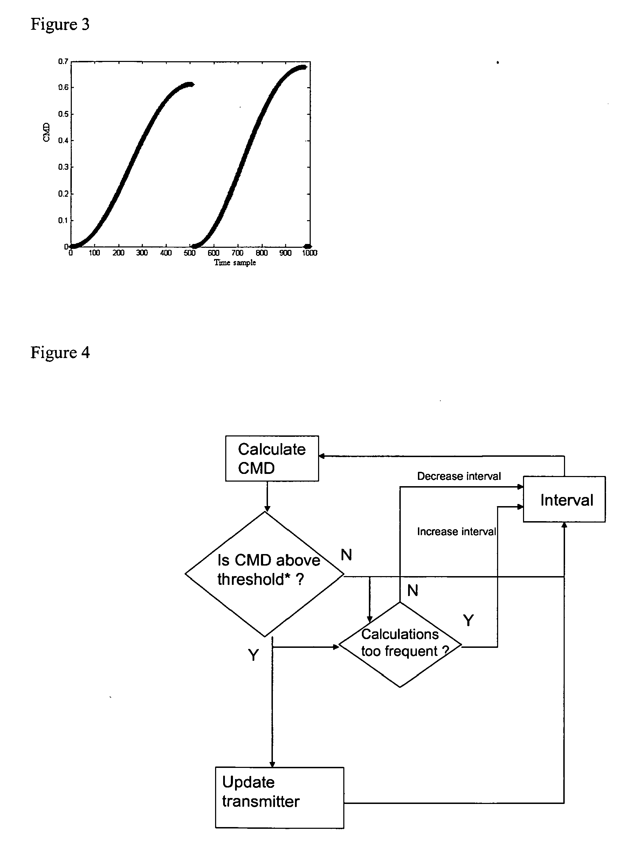

Using equation 9, Figure 3 is a plot of CMD for the ITU-B Pedestrian model at 10km/hr for a 2×2 system with FFT size 256. It shows that, when the velocity is 10km/hr, for approximately 500 time samples, the MIMO channels approach the maximum probable correlation, thereby reducing the capacity, which suggests that this is the maximum time interval for this speed.

The threshold could be set at a value determined to be the maximum tolerable correlation between signal paths, so that an update is sent when that threshold is exceeded.

It does not matter which method is used to determine how much correlation there is between the paths, equation 9 gives one such method that directly computes it from the correlation matrix R. Another would be to detect symbol energy that crosses over from one path to another, which would require exhaustive correlation calculations across all the symbol streams.

Preferably, but not essentially, the time variation could be determined in dependence on the ratio of (i) the product of a first instantaneous correlation matrix for a plurality of subcarriers at a first time and a second instantaneous correlation matrix for the plurality of subcarriers at a second time to (ii) the product of a normalised value of the first instantaneous correlation matrix and a normalised value of the second instantaneous correlation matrix.

CMD has advantages over other methods, such as computing the correlation across several symbol streams, in that it requires relatively little computational overhead.

In one embodiment of the present approach, whether to send an update to the transmitter is determined in dependence on the CMD (R1). As described above, updating is performed if R1 deteriorates below a predetermined threshold (R2). An example of this method is illustrated in figure 4. Figure 4 also illustrates that the interval at which R1 (and accordingly the underlying channel estimates) are calculated can be varied in dependence on the frequency with which updates are sent to the transmitter. The receiver will periodically carry out the CMD calculations and decide whether to send feed-back based on whether the difference threshold is exceeded. The receiver can alter the period between calculations adaptively, based on the amount by which the threshold is exceeded and on the threshold value history. This is the function carried out by the 'changes too frequent' box in figure 4.

The metrics described herein are independent of system type and can therefore be modified to fit with the protocol and frame structure of any adopting system. For example with WiMAX, although a user terminal can decide when to send an update, the 802.16 protocol demands that the base-station has to allocate slots to transmit it and this process will add delay.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features. In view of the foregoing description it will be evident to a person skilled in the art that various modifications may be made within the scope of the invention.

## Claims

1. A transceiver for operation in an antenna diversity communication system, the receiver comprising signal processing equipment configured to:

   form a channel estimate for a channel between the transceiver and a second transceiver;
   form an estimate of the correlation between paths of the channel;
   determine in dependence on the estimated path correlation whether to transmit data indicating that estimate to the second transceiver; and
   cause the transceiver to transmit data indicating that estimate to the second transceiver only if the said determination is positive.

2. A transceiver as claimed in claim 1, wherein the path correlation of the channel is estimated in dependence on the ratio of (i) the product of a first instantaneous correlation matrix for a plurality of subcarriers at a first time and a second instantaneous correlation matrix for the plurality of subcarriers at a second time to (ii) the product of a normalised value of the first instantaneous correlation matrix and a normalised value of the second instantaneous correlation matrix.

3. A transceiver as claimed in claim 2, wherein the instantaneous correlation matrix is determined as

$$\mathbf{R}_i(t_n) = \left\langle \mathrm{vec}\left(\mathbf{H(f)}_i(t_n)\right) \mathrm{vec}\left(\mathbf{H(f)}_i^{\mathrm{H}}(t_n)\right) \right\rangle$$ for the $i$th subcarrier and at the $t_n$ th time sample, where $H(f)_i$ is the

frequency response of the channel corresponding to the *i*th subcarrier.

4. A transceiver as claimed in any preceding claim, wherein the transceiver is arranged to determine that data indicating the channel estimate should be transmitted if the path correlation exceeds a predetermined threshold.

5. A transceiver as claimed in any preceding claim, wherein the transceiver is a MIMO transceiver.

6. A transceiver as claimed in any preceding claim, wherein the transceiver is an ODFM transceiver.

7. A transceiver as claimed in any preceding claim, wherein the transceiver is configured to determine when to form the channel estimate in dependence on the frequency with which channel estimates have previously been transmitted to the second transceiver.

8. A transceiver as claimed in any preceding claim wherein the said data indicating the channel estimate is data expressing the change in the channel estimate since it was last transmitted to the second transceiver.

9. A method for controlling a transceiver for operation in an antenna diversity communication system, the method comprising:

forming a channel estimate for a channel between the transceiver and a second transceiver;
forming an estimate of the correlation between paths of the channel;
determining in dependence on the estimated correlation whether to transmit data indicating that estimate to the second transceiver; and
transmitting data indicating that estimate to the second transceiver only if the said determination is positive.

Figure 1

Figure 2

Figure 3

Figure 4

**European Patent Office**

**EUROPEAN SEARCH REPORT**

Application Number

EP 08 25 1246

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2004/015887 A (NOKIA CORP [FI]; HAEMAELAEINEN JYRI K [FI]; WICHMAN RISTO [FI]) 19 February 2004 (2004-02-19) | 1,9 | INV. H04B7/06 H04B7/04 |
| Y | * page 3, line 1 - page 5, line 12 * * page 15, line 7 - page 16, line 34; claims 1,4; figure 5 * ----- | 1-5 | |
| X | US 2004/008648 A1 (SCHMIDL TIMOTHY M [US] ET AL) 15 January 2004 (2004-01-15) * paragraph [0004] - paragraph [0022]; figures 1,2 * ----- | 1,9 | |
| Y | HUI XIAO ET AL: "Full Channel Correlation Matrix of a Time-Variant Wideband Spatial Channel Model" PERSONAL, INDOOR AND MOBILE RADIO COMMUNICATIONS, 2006 IEEE 17TH INTERNATIONAL SYMPOSIUM ON, IEEE, PI, 1 September 2006 (2006-09-01), pages 1-5, XP031023760 ISBN: 978-1-4244-0329-5 * the whole document * ----- | 1-5 | |
| A | EP 1 865 619 A (MATSUSHITA ELECTRIC IND CO LTD [JP]) 12 December 2007 (2007-12-12) * paragraph [0045] - paragraph [0081]; figure 11 * * paragraph [0017] - paragraph [0031]; figures 1-3 * ----- | 1,9 | |

TECHNICAL FIELDS SEARCHED (IPC)

H04B

The present search report has been drawn up for all claims

| Place of search | Date of completion of the search | Examiner |
|---|---|---|
| Munich | 23 September 2008 | Burghardt, Gisela |

EPO FORM 1503 03.82 (P04C01)

**ANNEX TO THE EUROPEAN SEARCH REPORT
ON EUROPEAN PATENT APPLICATION NO.**

EP 08 25 1246

This annex lists the patent family members relating to the patent documents cited in the above-mentioned European search report.
The members are as contained in the European Patent Office EDP file on
The European Patent Office is in no way liable for these particulars which are merely given for the purpose of information.

23-09-2008

| Patent document cited in search report | | Publication date | Patent family member(s) | | Publication date |
|---|---|---|---|---|---|
| WO 2004015887 | A | 19-02-2004 | AT<br>AU<br>DE<br>EP<br>US | 375634 T<br>2002368163 A1<br>60222942 T2<br>1527529 A1<br>2005260954 A1 | 15-10-2007<br>25-02-2004<br>24-07-2008<br>04-05-2005<br>24-11-2005 |
| US 2004008648 | A1 | 15-01-2004 | NONE | | |
| EP 1865619 | A | 12-12-2007 | CA<br>CN<br>WO<br>KR | 2606377 A1<br>101167267 A<br>2006118123 A1<br>20070118269 A | 09-11-2006<br>23-04-2008<br>09-11-2006<br>14-12-2007 |

## REFERENCES CITED IN THE DESCRIPTION

**Non-patent literature cited in the description**

- **Heath ; Paulraj.** Switching Between Diversity and Multiplexing. *MIMO systems,* 2005
- Guidelines for Evaluation of Radio Transmission Technologies for IMT-2000. *ITU-R Recommendation M.1225,* 1997, 28
- **S. M. Alamouti.** A simple transmit diversity technique for wireless communications. *IEEE J. Sel. Area Commun.,* October 1998, vol. 16 (8), 1451-1458
- **M. A. Khalighi ; J. -M. Brossier ; G. Jourdain ; K. Raoof.** Water filling Capacity of Rayleigh MIMO channels. *IEEE International Symposium on Personal, Indoor and Mobile Radio Communications,* 2001, vol. 1, 155-158
- **I. E. Telatar.** Capacity of multi-antenna Gaussian channels. *Europ. Trans. Telecommun.,* November 1999, vol. 10 (6), 585-595
- **M. Herdin ; E. Bonek.** A MIMO Correlation Matrix based Metric for Characterizing Non-Stationarity. *Institut für Nachrichtentechnik und Hochfrequenztechnik, Technische Universität Wien, Austria,* 2004
- **H. Xiao ; A. G. Burr ; L. Song.** A Time-Variant Wideband Spatial Channel Model Based on the 3GPP Mode. *IEEE Vehicular Technology Conference (VTC),* September 2006